# FASCICULE DE BREVET EUROPEEN

(11) **EP 1 118 443 B1**
(45) Date de publication et mention de la délivrance du brevet: **28.07.2004**
(21) Numéro de dépôt: 01400123.4
(22) Date de dépôt: 17.01.2001
(51) Int. Cl.: B29C 33/16, A47C 31/02, A44B 18/00, B29C 37/00

(54) **Pièce à surmouler pour un objet moulé et procédé de surmoulage**
Einsatz sowie Giessformverfahren zum Übergiessen desselben
Insert for overmoulding and overmoulding process

(30) Priorité: 19.01.2000 US 487938
(43) Date de publication de la demande: 25.07.2001
(73) Titulaire: Aplix Inc., Charlotte, North Carolina 28241 (US)
(72) Inventeur: Billancourt, Patrick, Charlotte, North Carolina 28120 (US); Woodling, Marc, Charlotte, North Carolina 28270 (US)
(74) Mandataire: Eidelsberg, Olivier

(56) Documents cités:
- EP-A- 0 439 969
- FR-A- 2 288 024
- US-A- 3 829 355
- US-A- 4 563 380
- US-A- 4 693 921
- US-A- 5 403 645
- F.STRASSER: "Stanzteile zum Einbetten in Kunststoffteile" KUNSTSTOFFE., vol. 78, no. 2, février 1988 (1988-02), pages 151-153, XP002167842 CARL HANSER VERLAG. MUNCHEN., DE ISSN: 0023-5563

## Description

La présente invention concerne les pièces à surmouler, les objets moulés sur lesquels ces pièces sont surmoulées et les procédés de fabrication d'objets moulés. L'invention trouve une application de choix dans la fabrication de coussins ou de sièges de véhicules automobiles ou d'avions.

Pour fixer une pièce à surmouler à un corps en une matière plastique, notamment un corps en polyuréthanne constituant un coussin, afin de le doter de moyens d'accrochage, il est connu de mettre une pièce à surmouler comprenant une âme sur les deux bords d'une cavité ménagée au fond d'un moule. Des éléments d'accrochage sont issus de la face inférieure de l'âme. Dans le fond de la cavité est prévu un aimant, tandis qu'une couche métallique susceptible d'être attirée par l'aimant est déposée sur la face supérieure de l'âme. Pour assurer l'étanchéité de la cavité dans laquelle se trouvent les éléments d'accrochage et empêcher lors du moulage ultérieur du polyuréthanne que de la mousse liquide ou pâteuse n'accède à cette cavité et n'altère la capacité d'agrippage des éléments d'accrochage, il est interposé, avec collage, entre les bords de la cavité en saillie du fond du moule et l'âme, une couche de mousse. Lorsque la mousse liquide pour former l'objet moulé est versée, son poids écrase la mousse, ce qui donne une bonne étanchéité. Le montage dans le moule est rapide et l'étanchéité est bien assurée, mais la fabrication est compliquée. Il faut notamment, afin de mettre la mousse sur le pourtour de la face inférieure de l'âme, écraser les éléments d'accrochage qui s'y trouvent.

On a remédié à cet inconvénient en prévoyant une âme de deux côtés opposés de laquelle des rampes partent vers le haut en s'écartant l'une de l'autre. On maintient l'âme dans la cavité en introduisant toute l'âme y compris les rampes dans la cavité, une légère déformation des rampes permettant de les clipser sur les faces verticales intérieures des nervures délimitant la cavité au fond du moule. La déformation par clipsage des rampes assure l'étanchéité, mais le clipsage est une opération qui prend beaucoup de temps.

US-A.5.061.540 décrit une pièce à surmouler constituée d'une bande comportant sur une face inférieure des crochets et sur l'autre face un matériau aimanté.

Le matériau aimanté sert à positionner cette pièce à surmouler dans le fond d'un moule pour pouvoir verser de la mousse dessus pour réaliser par exemple un coussin automobile comportant des crochets formant partie mâle d'un auto-agrippant permettant de fixer au coussin une enveloppe par exemple une housse comportant les parties femelles de l'auto-agrippant.

Dans le fond du moule se trouvent deux parois verticales entre lesquelles sont disposés les crochets pour les protéger de la mousse versée.

Un aimant est disposé au fond du moule entre les parois pour bien positionner la pièce à surmouler avant de verser la mousse.

La bande est en un matériau souple qui se déforme, notamment sous l'effet de la force magnétique entre la couche de matériau aimanté et l'aimant au fond du moule, au niveau des bords supérieurs des parois.

Pour protéger les crochets de la mousse lorsqu'elle est versée, il est prévu des nervures en élastomère de part et d'autre des crochets. Ces nervures sont difficiles à fabriquer au moulage et limitent la place réservée aux crochets. En outre, leur raideur doit être réglée de manière fine, pour d'une part ne pas s'affaisser sous la pression de la mousse, ce qui abimerait les crochets, et cependant suffisamment souple pour protéger les crochets en réalisant bien l'étanchéité de la chambre où se trouvent les crochets.

L'objet moulé final (c'est-à-dire par exemple le coussin d'automobile avec les crochets) a des crochets dont l'accès est difficile en raison de ces nervures et notamment on ne peut pas amener la partie femelle horizontalement.

US-A-4563380 décrit une pièce à surmouler suivant le préambule de la revendication 1. Pour bien protéger les crochets lorsque de la mousse liquide est coulée dessus pour former un objet moulé (par exemple un coussin automobile), il est prévu un film plastique qu'il faut ensuite retirer.

US-A-3829355 décrit une pièce à surmouler ayant des rampes inclinées par rapport à l'âme. Il s'agit d'une pièce décorative ne comportant pas de crochets et sur laquelle il n'est pas prévu de couler de la mousse liquide avec le besoin attenant de protéger les crochets.

L'invention vise à remédier à ces inconvénients, par une pièce à surmouler qui ne nécessite plus d'écraser les crochets à sa périphérie, ni d'appliquer des couches de mousse et de colle, ni non plus de clipser des rampes dans la cavité auxiliaire dans le fond du moule pour la mise en place, ce qui simplifie le montage dans le moule et le rend bien plus rapide, sans compliquer comme auparavant la fabrication de la pièce à surmouler elle-même. En outre, l'invention permet de simplifier le moulage de l'âme et de mieux assurer la retenue du corps de l'objet moulé à l'âme.

La pièce à surmouler comprend une âme. Des éléments d'accrochage sont issus de la face inférieure de l'âme. Deux rampes partent vers le haut en s'écartant l'une de l'autre de deux côtés opposés de l'âme. Suivant l'invention, de la matière susceptible d'être attirée par un aimant est fixée à la face supérieure de l'âme.

Pour fabriquer l'objet moulé on pose les rampes de la pièce à surmouler sur les bords de deux nervures qui sont issues du fond d'un moule et entre lesquelles un aimant est fixé sur le fond du moule en sorte que la matière susceptible d'être attirée par un aimant soit attirée par l'aimant fixé sur le fond du moule et que la pièce à surmouler soit bien maintenue sur les rampes ce qui assure une bonne étanchéité. Puis on emplit le moule d'une matière plastique liquide, on laisse la matière plastique liquide se solidifier et on démoule l'objet moulé.

On supprime ainsi tout clipsage, tout en obtenant une bonne étanchéité en raison de l'attraction magnétique, mais sans avoir pour autant à déposer une couche de mousse supplémentaire et une couche de colle entre les nervures et le bord d'une pièce à surmouler, ni surtout à avoir à écraser les éléments d'accrochage qui sont sur les bords de l'âme.

L'âme est habituellement en une matière plastique par exemple du type thermoplastique, notamment en polypropylène, polyamide, etc.

Comme matière susceptible d'être attirée par un aimant on peut utiliser de la poudre d'acier mélangée dans des résines polymériques, notamment dans une proportion variant de 40/60 % en poids à 70/30 % en poids.

Suivant un mode de réalisation particulièrement avantageux, les bords libres des rampes ont un rebord allant vers l'extérieur. Ces rebords viennent ainsi se placer à un niveau plus haut que les bords supérieurs des nervures en sorte que, lors du moulage de l'objet moulé, de la matière liquide vient non seulement sur la face supérieure de ces rebords, mais également sur une partie de leur face inférieure, ce qui fait qu'une partie du corps est au contact de la face inférieure des rampes et est ainsi bien retenue à l'âme, sans pour autant qu'il soit nécessaire de prévoir des éléments d'ancrage particuliers et sans pour autant qu'il soit porté atteinte à la faculté de mouler facilement sans contredépouille l'âme, puisque ces rebords peuvent être en contredépouille. Il est néanmoins possible de prévoir également des éléments d'ancrage issus de la face supérieure de l'âme et de faire en sorte aussi également que les bords libres des rampes présentent aussi un rebord allant vers l'intérieur et servant à cette même fin.

Les rampes peuvent ne pas être planes. De préférence, elles font entre elles un angle compris entre 90° et 170°.

On obtient ainsi un objet moulé comprenant un corps en une matière plastique auquel est liée par moulage une pièce à surmouler suivant l'invention.

Le corps peut être en une matière plastique compatible avec celle de l'âme, c'est-à-dire qui ménage lors du moulage dans le moule une adhérence entre le corps et l'âme, avec toutefois la possibilité, en raison du fait qu'une partie du corps est en contact de la face inférieure des rampes et ménage ainsi une retenue, d'étendre la palette des matières plastiques que l'on peut choisir pour la pièce à surmouler et pour le corps. Comme matière pour le corps on peut citer le polyuréthanne. Le plus souvent le corps est en une matière de nature différente de celle de l'âme, pour conférer à chacune d'entre elles les propriétés propres qui leur conviennent, par exemple l'élasticité à de la mousse de rembourrage d'un coussin et la rigidité à une pièce d'accrochage.

On peut fabriquer une pièce surmoulée par extrusion, par exemple suivant le même procédé que celui décrit dans le brevet européen N° 0.657.118 au nom de Kuraray Co, Ltd.

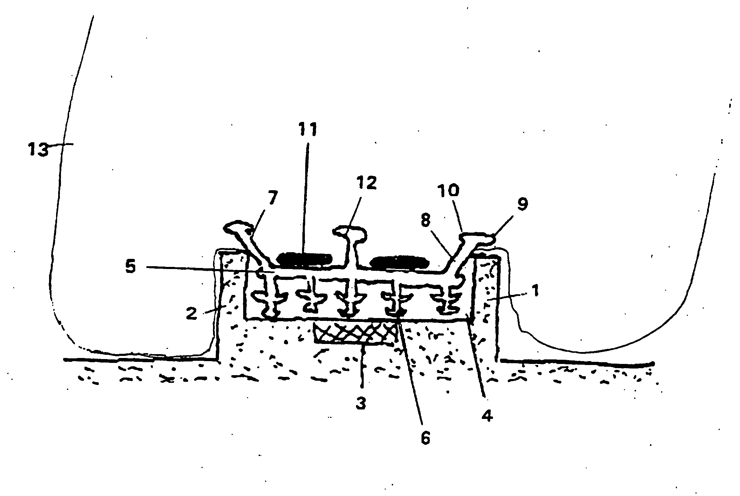

La figure unique du dessin annexé illustre l'invention.

La figure représente le fond d'un moule en coupe transversale. Il en est issu deux nervures 1, 2 parallèles, verticales. Dans la partie du fond comprise entre les deux nervures 1 et 2 est fixé un aimant 3 permanent. Les deux nervures 1, 2 délimitent une cavité 4 en forme de caniveau.

Une pièce à surmouler comprend une âme 5 de laquelle sont issus des éléments d'accrochage 6 et des deux côtés opposés de laquelle partent vers le haut en s'écartant l'une de l'autre deux rampes 7, 8. Les bords libres des rampes ont un rebord 9 allant vers l'extérieur ainsi qu'un rebord 10 allant vers l'intérieur. Ces rebords sont sensiblement horizontaux. Sur la face supérieure de l'âme 5 sont déposés des plots 11 en une matière susceptible d'être attirée par un aimant notamment de la poudre d'acier mélangée dans une résine polymérique dans une proportion de 50/50 en poids. De la face supérieure de l'âme 5 partent des éléments 12 d'ancrage en forme de champignon ou de crochet.

Pour mouler un objet on pose les rampes 7, 8 sur les bords des nervures 1, 2 de sorte qu'il subsiste une partie de rampe entre l'extrémité supérieure des nervures 1, 2 et les rebords 9. Les éléments 6 d'accrochage sont ainsi enfermés dans la cavité 4 qui est rendue étanche par le fait que la coopération de l'aimant 3 et des plots 11 donnent un bon contact entre les rampes 7, 8 et les arêtes intérieures des bords supérieurs des nervures 1, 2. On emplit ensuite le moule d'une matière plastique liquide, notamment du polyuréthanne. Cette matière emplit tout le moule à l'exception de la cavité 4 dans laquelle elle ne peut pas pénétrer et elle vient notamment dans l'espace compris entre les rebords 9 et les nervures 1 et 2. On laisse la matière liquide se solidifier en un corps 13 et l'on démoule l'objet.

La dimension suivant le sens longitudinal (perpendiculairement à la figure) de la pièce à surmouler est en général comprise entre 100 et 500 mm.

La largeur de l'âme S est comprise entre 8 mm à 20 mm, de préférence 10 à 15 mm, par exemple 12 mm.

Les plots 11 sont sous la forme de deux rubans longitudinaux, d'environ 3,5 mm de large et 0,5 mm d'épaisseur. Les deux rubans adhérent à la face supérieure de l'âme 5 en raison de la présence de la résine dans le mélange acier/résine constituant le matériau en lequel sont réalisés les rubans ou les plots.

Les rubans formant les plots 11 sont déposés sur l'âme 5 après formation par extrusion de la pièce à surmouler.

## Revendications

1. Pièce à surmouler, destinée à être posée au fond d'un moule pour y couler par-dessus de la matière liquide, comprenant une âme (5), de la face inférieure de laquelle sont issus des éléments (6) d'accrochage, de la matière (11) susceptible d'être attirée par un aimant étant fixée à la face supérieure de l'âme (5), **caractérisé en ce que** de deux côtés opposés de l'âme partent vers le haut en s'écartant l'une de l'autre deux rampes (7, 8) et la pièce à surmouler est en un matériau suffisamment rigide pour que l'angle formé entre chaque rampe et l'âme reste sensiblement constant lorsque la pièce à surmouler est disposée sur les bords supérieurs de deux parois verticales disposées dans le fond d'un moule, les éléments d'accrochage étant disposés entre les deux parois et les rampes reposant chacune sur un des bords supérieurs, la pièce à surmouler subissant une force l'attirant vers le fond du moule, force correspondant à l'attraction magnétique de la matière susceptible d'être attirée par un aimant au fond du moule entre les parois, de sorte que lorsque l'on coule de la matière liquide sur la pièce à surmouler les crochets qui se trouvent entre les deux parois au fond du moule sont protégés de la matière liquide.

2. Pièce suivant la revendication 1, **caractérisée en ce que** l'âme (5) est en matière plastique.

3. Pièce suivant la revendication 2, **caractérisée en ce que** la matière plastique est de type thermoplastique.

4. Pièce suivant l'une des revendications 1 à 3, **caractérisée en ce que** les bords des rampes (7, 8) ont un rebord (9) allant vers l'extérieur.

5. Pièce suivant l'une des revendications 1 à 4, **caractérisée par** un élément (12) d'encrage issu de la face supérieure de l'âme.

6. Pièce suivant l'une des revendications 1 à 5, **caractérisée en ce que** chaque rampe fait avec l'âme un angle compris entre 100° et 160°.

7. Objet moulé comprenant un corps (13) en une matière plastique compatible avec celle de l'âme, **caractérisé en ce qu'**une pièce à surmouler suivant l'une des revendications 1 à 6 y est liée par la face supérieure, une partie du corps étant au contact de la face inférieure des rampes et les extrémités libres des éléments d'accrochages dépassent, vers l'extérieur du corps, au-delà de la pièce à surmouler.

8. Procédé de fabrication d'un objet moulé suivant la revendication 7, **caractérisé en ce qu'**il consiste à poser les rampes d'une pièce à surmouler suivant l'une des revendications 1 à 6 sur les bords de deux nervures qui sont issues du fond d'un moule et entre lesquelles un aimant est fixé sur le fond du moule, à laisser la matière plastique liquide se solidifier et à démouler l'objet moulé.

## Patentansprüche

1. Zu umspritzendes Teil, das dazu vorgesehen ist, am Boden einer Gießform angebracht zu werden, um eine flüssige Masse darüber zu gießen, mit einer Seele bzw. einem Kern (5), von deren/dessen Unterseite Einhakelemente (6) aus der Masse (11) vorstehen, welche von einem an der Oberseite des Kerns (5) befestigten Magneten angezogen werden können,
**dadurch gekennzeichnet, dass** die beiden entgegengesetzten Seiten des Kerns nach oben verlaufen, indem zwei Schrägflächen (7,8) sich voneinander entfernen, und das zu umspritzende Teil aus einem genügend starren Material ist, damit der zwischen jeder Schrägfläche und dem Kern gebildete Winkel im wesentlichen konstant bleibt, wenn das zu umspritzende Teil an den oberen Rändern zweier am Boden einer Gießform angeordneter vertikaler Wände angeordnet ist, die Einhakelemente zwischen den beiden Wänden angeordnet sind und die Schrägflächen jeweils auf einem der oberen Ränder ruhen, wobei das zu umspritzende Teil einer Kraft ausgesetzt ist, die es zum Boden der Gießform hin zieht, wobei die Kraft der magnetischen Anziehung der Masse entspricht, die von einem Magneten zwischen den Wänden zum Boden der Gießform gezogen werden kann, so dass beim Gießen der flüssigen Masse auf das zu umspritzende Teil die Haken, die sich zwischen den beiden Wänden am Boden der Gießform befinden, vor der flüssigen Masse geschützt sind.

2. Teil nach Anspruch 1, **dadurch gekennzeichnet, dass** die Seele bzw. der Kern (5) aus Kunststoff ist.

3. Teil nach Anspruch 2, **dadurch gekennzeichnet, dass** der Kunststoff vom thermoplastischen Typ ist.

4. Teil nach einem der Ansprüche 1 bis 3, **dadurch gekennzeichnet, dass** die Ränder der Schrägflächen (7,8) eine nach außen gerichtete Randleiste (9) aufweisen.

5. Teil nach einem der Ansprüche 1 bis 4, **gekennzeichnet durch** ein von der Oberseite des Kerns vorstehendes Verankerungslement (12).

6. Teil nach einem der Ansprüche 1 bis 5, **dadurch gekennzeichnet, dass** jede Schrägfläche mit dem Kern einen zwischen 100° und 160° liegenden Winkel bildet.

7. Gegossener Gegenstand mit einem Körper (13) aus Kunststoff, der mit dem des Kerns kompatibel ist, **dadurch gekennzeichnet, dass** ein zu umspritzendes Teil nach einem der Ansprüche 1 bis 6 mit diesem über seine Oberseite verbunden ist, wobei ein Abschnitt des Körpers mit der Unterseite der Schrägflächen in Kontakt steht und die freien Enden der Einhakelemente vom Körper nach außen über das zu umspritzende Teil hinaus vorstehen.

8. Verfahren zur Herstellung eines gegossenen Gegenstands nach Anspruch 7, **dadurch gekennzeichnet, dass** es darin besteht, die Schrägflächen eines zu umspritzenden Teils nach einem der Ansprüche 1 bis 6 auf die Ränder zweier Rippen, die vom Boden einer Gießform vorstehen und zwischen denen ein Magnet am Boden der Gießform befestigt ist, aufzubringen, den Kunststoff sich verfestigen zu lassen und den gegossenen Gegenstand aus der Gießform zu entnehmen.

## Claims

1. A component for overcasting, to be disposed in the bottom of a mould so that liquid material can be cast on it, including a base (5), the under side of which featuring hooking elements projecting from said underside, and a material (11) that can be attracted by a magnet being fixated on the upper side of the base (5), **characterized in that** from two opposite sides of the base two ramps(7, 8) are extending themselves upwardly and away from each other, andsaid component for overcasting is made of a sufficiently rigid material for the angle formed between each ramp and said base to stay substanstially constant when said component is disposed on the top edges of two vertical walls in the bottom of a mold, said hooking elements being disposed between said two walls and said ramps resting each on one top edge, said component being submitted to a force attracting it to the bottom of said mold, this force corresponding to the magnetic attraction of said material that can be attracted by a magnet in the bottom of the mold between the walls, so that when liquid material is poured on said component said hooking elements that are between the two walls in the bottom of the mould are protected against said liquid material.

2. A component according to claim **1**, **characterized in that** the base (5) is in a plastic material.

3. A component according to claim **2**, **characterized in that** the plastic material is of a thermoplastic type.

4. A component according to one of claims **1 to 3**, **characterized in that** the edges of the ramps (7, 8) feature a lip (9) jutting outward.

5. A component according to one of claims **1 to 4**, **characterized in that** an anchoring element (12) is jutting from the upper side of the base.

6. A component according to one of claims **1 to 5, characterized in that** each ramp makes an angle with said base comrised between 100° and 160°.

7. A moulded object including a body (13) in a plastic material compatibl to that of the base, **characterized in that** a component for overcasting according to one of claims 1 to 6 is linked to it by its upper side, wherein in a part of the body is in contact with the under side of the ramp and the free ends of the fixating elements extend beyond the component, towards the exterior of said body.

8. An manufacturing process of a moulded object according to claim 7, **characterized in that** it consists of placing the ramps of a component for overcasting according to one of claims 1 to 6 on the edges of two ribs projecting from the bottom of a mould, and between which a magnet is fixated at the bottom of a mould, of then leaving the liquid plastic material solidify to and then of casting the moulded object.
